**Europäisches Patentamt**

**European Patent Office**

**Office européen des brevets**

(19)

(11) Veröffentlichungsnummer: **0 204 156**
**B1**

(12) **EUROPÄISCHE PATENTSCHRIFT**

(45) Veröffentlichungstag der Patentschrift: **11.04.90**

(51) Int. Cl.⁵: **F 16 B 39/282**

(21) Anmeldenummer: **86106053.1**

(22) Anmeldetag: **02.05.86**

(54) Schraubenbolzen.

(30) Priorität: **07.05.85 IT 6520285**

(43) Veröffentlichungstag der Anmeldung:
**10.12.86 Patentblatt 86/50**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**DE-U-1 867 238       US-A-2 217 951**
**FR-A-1 596 763       US-A-2 982 166**
**GB-A- 902 367        US-A-3 640 326**
**US-A-2 026 757**

**PATENT ABSTRACTS OF JAPAN, Band 1, Nr. 14**
**(M-76), 22. März 1977, Seite 1047 M 76; & JP - A -**
**51 126 460 (TOKYO RASHI SEISAKUSHO K.K.)**
**11.04.1976**
**IDEM**

(73) Patentinhaber: **Mattiauda, Tomaso**
**Via Marici 7**
**I-17020 Boissano (IT)**

(72) Erfinder: **Mattiauda, Tomaso**
**Via Marici 7**
**I-17020 Boissano (IT)**

(74) Vertreter: **Porsia, Attilio, Dr. et al**
**c/o Succ. Ing. Fischetti & Weber Via Caffaro 3/2**
**I-16124 Genova (IT)**

Courier Press, Leamington Spa, England.

**Beschreibung**

Die Erfindung betrifft eine Verbindung von Blechen mittels eines durch eine Bohrung in den Blechen geführten Schraubenbolzens nach dem Oberbegriff des Patentanspruchs 1.

Eine Schraubenbolzenverbindung dieser Art ist aus der FR-A-1 596 763 bekannt. Der Schraubenbolzen dieser bekannten Verbindung weist einen einzigen Selbstsperrvorsprung auf und ist insbesondere zur Verbindung von Holzbauteilen bestimmt, wobei der Selbstsperrvorsprung beim Festziehen der Mutter in das anliegende Material des Holzbauteils eingreift, d.h. in dieses einschneidet.

Aus der US-A-2 217 951 ist eine Maschinenschraube bekannt, die auf der Unterseite ihres kegelförmigen Schraubenkopfs einen vorspringenden scharfen Sperrzahn aufweist. Beim Anziehen dieser Schraube schneidet der Sperrzahn in die kegelförmige Mantelfläche einer den Schraubenkopf aufnehmenden Aussenkung ein.

Es ist ausserdem eine Schraubenbolzenverbindung insbesondere für Brillenscharniere bekannt (DE-U-1.867.238), bei der zwischen dem Bolzenkopf und dem Bolzenschaft ein kegelförmiger Abschnitt mit einer Sperrverzahnung vorgesehen ist. Diese Sperrverzahnung frisst sich beim Festziehen des Schraubenbolzens in eine kegelförmige Aussenkung des Scharnierteils ein bzw. greift in eine entsprechende im Scharnierteil vorgesehene Gegenverzahnung ein.

Eine ähnlich ausgebildete Schraubenmutter mit einem gerändelten oder gezähnten, zylinder- oder kegelförmigen Sperrteil ist aus der US-A-2 026 757 bekannt. Auch in diesem Fall frisst sich der gerändelte bzw. gezähnte Sperrteil der Schraubenmutter in die Kante einer Bohrung ein, in die die Schraubenmutter eingreift.

Ein aus der GB-A-902 367 bekannter Schraubenbolzen weist auf der Unterseite des Bolzenkopfs auf diametral entgegengesetzten Seiten angeordnete, untereinander parallele, unterseitig flach geneigte Zähne auf, die beim Festziehen des Schraubenbolzens in das unter dem Bolzenkopf liegende Gegenmaterial eingreifen müssen, wenn der Bolzenkopf satt gegen das darunterliegende Bauteil anliegen soll. Aus der US-A-3 640 326 ist ein ähnlich ausgebildeter Schraubenbolzen zur Verbindung von gekrümmten Stahlbauteilen bekannt, der auf der etwa halbkugelförmig gekrümmten Unterseite des Bolzenkopfs vier radial gerichtete, äquiangulär voneinander abstehende Sperrippen aufweist, die ebenfalls dazu bestimmt sind, sich in das unter dem Bolzenkopf liegende Gegenmaterial einzufressen, wenn der Bolzenkopf satt gegen dieses Material zur Anlage kommen soll.

Aus der US-A-2 982 166 ist dagegen eine Holzschraube bekannt, die unterhalb des Schraubenkopfs eine kegelförmige längsgerichtete Verzahnung mit vier achsparallelen. voneinander äquiangulär abstehenden Sperrzähnen aufweist. die in das Holz einschneiden und ein hakenförmiges, das Ausschrauben verhinderndes Querschnittsprofil aufweisen.

Die aus der JP-A-51 126 460 bekannte Maschinenschraube weist in der Ecke zwischen Schraubenkopf und Schraubenschaft einen Vorsprung auf, der beim Festziehen der Schraube eine unter dem Schraubenkopf liegende, dünne Platte verformt und in eine darunterliegende, kegelförmige Aussenkung der Gewindebohrung drückt.

Diesem Stand der Technik gegenüber ist die erfindungsgemässe Verbindung von Blechen durch die Kombination der im kennzeichnenden Teil des Anspruchs 1 angeführten Merkmale gekennzeichnet.

Bei dieser Ausbildung der Verbindung von Blechen, mittel eines durch eine Bohrung in den Blechen geführten Schraubenbolzens, wird zunächst eine automatische Zentrierung des Schraubenbolzens in der entsprechenden Bohrung der Bleche durch die mindestens zwei keilförmigen, untereinander äquiangulär angeordneten Selbstsperrvorsprünge erzielt. Die Selbstsperrvorsprünge greifen dabei teilweise in die genannte Bohrung ein und kommen mit ihrer radial äusseren Fläche gegen die Mündungskante dieser Bohrung zur Anlage. Die Drehung des Schraubenbolzens wird durch die einfache Reibung zwischen den Selbstsperrvorspüngen und der Mündungskante der den Bolzenschaft aufnehmenden Bohrung verhindert. Die Mutter des Schraubenbolzens kann deshalb auf den Gewindeteil des Bolzenschafts geschraubt und festgezogen werden, ohne die Notwendigkeit, den Bolzenkopf handmässig festzuhalten, um die Drehung des Bolzenschafts zu verhindern. Die Anfangsreibung auf Grund der einfachen Berührung zwischen den keilförmigen Selbstsperrvorsprüngen und der Mündungskante der Bohrung in den Blechen erweist sich als vollkommen ausreichend, um die Drehung des Bolzenschafts in der Anfangsphase des Aufschraubens der Mutter zu verhindern, bis diese mit einem der zu verbindenden Blechen in Berührung kommt. In der anschliessenden Phase eines Festziehens der Mutter wird die radial äussere Fläche der Selbstsperrvorsprünge infolge der erfindungsgemässen Ausbildung dieser Vorsprünge verformt, d.h. gegen die Mündungskante und die Innenwandung der Bohrung zusammengedrückt und abgeflacht. Infolgedessen dringen die Selbstsperrvorsprünge keilartig tiefer in die Bohrung ein und die entsprechende Reibung wird dermassen erhöht, dass sie auch in der Endphase des Aufschraubens der Mutter bis zum vollständigen Festziehen derselben die Drehung des Bolzenschafts mit Sicherheit verhindert.

Die keilförmigen Selbstsperrvorsprünge des Schraubenbolzens der erfindungsgemässen Verbindung können in stirnseitigem Aufriss, d.h. gesehen in zum Schraubenbolzen radialer Richtung eine beliebige Form, vorzugsweise eine sich gegen ihr dem Bolzenkopf abgekehrtes Ende verjüngende Form, insbesondere eine dreieckige, halbovale, halbkreisförmige oder ähnliche Form aufweisen. Auch die geneigte, radial äussere Fläche der keilförmigen Selbstsperrvorsprünge kann eine beliebige Form aufweisen und kann z.B. gewölbt over eben sein. In seiner Gesamtheit kann also jeder keilförmige Selbstsperrvorsprung des Schraubenbolzens der erfindungsgemässen Verbindung eine im wesentlichen halbkegelförmige, halbpyramidenförmige oder ähnliche Gestalt aufweisen und kann sogar aus einem kleinen, ebenen, verhältnismässig schmalen, im wesentlichen radialen Steg bestehen, der in seitlichem Aufriss, d.h. gesehen in zum Schraubenbolzen tangentialer Richtung eine dreieckige oder trapezähnliche Form aufweist. In einer bevorzugten Ausführungsform ist die geneigte, radial äussere Fläche jedes keilförmigen Selbstsperrvorsprungs des Schraubenbolzens mit einer Kante ausgebildet. In diesem Fall weisen die keilförmigen Selbstsperrvorsprünge vorzugsweise die Form eines Tetraeders od. dgl. auf.

Ein Ausführungsbeispiel der Erfindung ist in den Zeichnungen dargestellt. Es zeigen:

Fig. 1 den Schraubenbolzen einer erfindungsgemässen Verbindung von Blechen, in seitlichem Aufriss.

Fig. 2 den Schraubenbolzen gesehen in der Pfeilrichtung II der Fig. 1.

Fig. 3 eine Ansicht auf die Unterseite des Bolzenkopfes gesehen in der Pfeilrichtung III der Fig. 1.

Fig. 4 den Schraubenbolzen nach Fig. 1 bis 3 in eingebautem Zustand zur Verbindung von zwei Blechen.

Fig. 5 und 6 das Verhalten eines keilförmigen Selbstsperrvorsprungs des Schraubenbolzens nach Fig. 1 bis 4, in vergrössertem Teilaufriss und in zwei verschiedenen Phasen beim Festziehen dieses Schraubenbolzens.

Fig. 7 einen Teilaufriss gesehen in der Pfeilrichtung VII der Fig. 6.

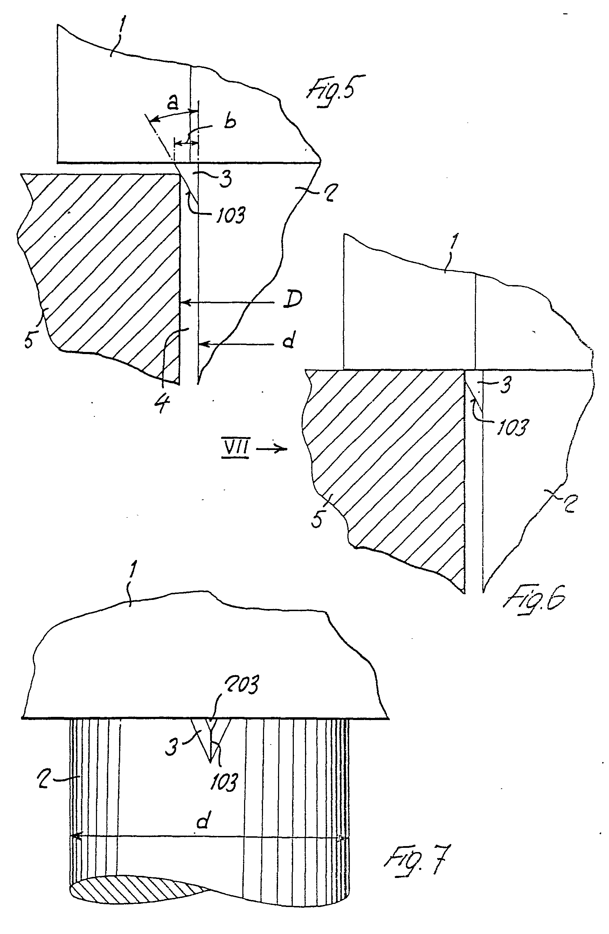

Bezugnehmend auf die Figuren ist der erfindungsgemässe Schraubenbolzen in der Ecke zwischen seinem Kopf 1 und seinem Schaft 2 mit zwei Selbstsperrvorsprüngen 3 versehen, die einstückig mit dem Schraubenbolzen ausgebildet und in diametral entgegengesetzten Stellungen angeordnet sind. Jeder Vorsprung 3 weist im wesentlichen die Form eines Tetraeders auf, mit einer mit der unteren Fläche des Bolzenkopfes 1 verbundenen Seitenfläche, einer anderen, mit der Mantelfläche des Bolzenschafts 2 verbundenen Seitenfläche und einer auf der radial äusseren Seite des Vorsprungs 3 vom Bolzenkopf 1 bis zum Bolzenschaft 2 verlaufenden Kante 103. Infolgedessen weist jeder keilförmige Selbstsperrvorsprung 3 in seitlichem Aufriss, d.h. gesehen in zum Schraubenbolzen tangentialer Richtung eine dreieckige Form auf, deren radial äussere Seite um einen Winkel "a" nach aussen gegenüber der Mantelfläche des Bolzenschafts 2 geneigt ist. Der genannte Winkel "a" weist vorzugsweise eine Grösse von höchstens 45° auf. Jeder Selbstsperrvorsprung 3 erweitert sich also radial in Richtung auf den Bolzenkopf 1 und weist an seinem breitesten, direkt unter dem Bolzenkopf 1 liegenden Basisteil eine Breite "b" auf, die etwas grösser ist als die Hälfte der Differenz D-d zwischen dem Durchmesser D der in den beiden zu verbindenden Blechen 5, 6 vorgesehenen Bohrung 4 und dem Durchmesser "d" des in diese Bohrung 4 eingeführten Bolzenschafts 2. In stirnseitigem Aufriss, d.h. gesehen in zum Schraubenbolzen radialer Richtung weist jeder keilförmige Selbstsperrvorsprung 3 eine dreieckige Form auf mit einer vom Bolzenkopf 1 weg gerichteten Spitze. Der Schraubenbolzen ist durch Gesenkschmieden, vorzugsweise aus nicht gehärtetem Stahl hergestellt.

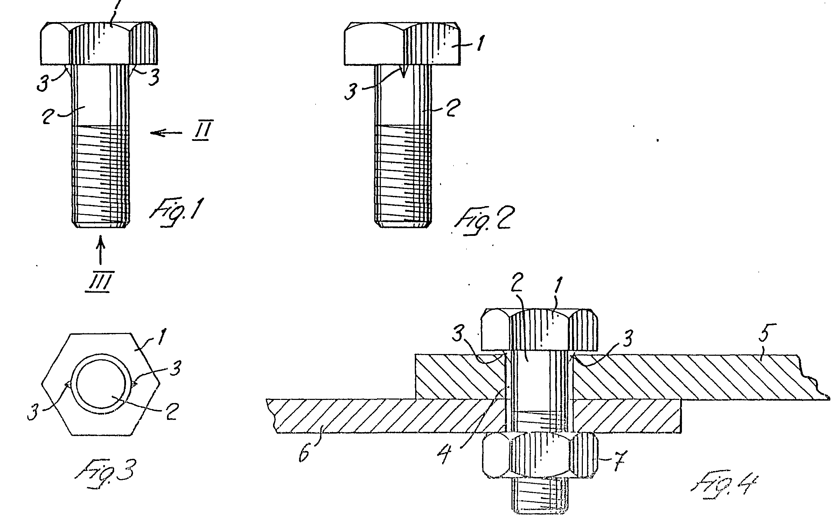

Das Ganze ist derart ausgebildet und ausgelegt, dass folgende Wirkungsweise erzielt wird. Wenn der vorstehend beschriebene Schraubenbolzen mit seinem Schaft 2 in die Bohrung 4 der beiden zu verbindenden Bleche 5, 6 eingeführt wird, kommen die keilförmigen Selbstsperrvorsprünge 3 mit ihren radial äusseren Kanten 103 gegen die Mündungskante der Bohrung 4 zur Anlage, wobei sie die Zentrierung des Bolzenschafts 2 in der Bohrung bewirken und nur etwas aus der Bohrung 4 vorstehen, wie in Fig. 4 dargestellt ist. Die durch die einfache Berührung zwischen den Kanten 103 der Selbstsperrvorsprünge 3 und der Mündungskante der Bohrung 4 erzeugte Reibung ist ausreichend gross, um die Selbstsperrung des Schraubenbolzens zu bewirken, d.h. die Drehung des Schraubenbolzens beim Aufschrauben der Mutter 7 auf den Gewindeteil des Bolzenschafts 2 zu verhindern. Die Mutter 7 wird infolgedessen aufgeschraubt, ohne den Bolzenschaft 2 unbedingt mit Hilfe eines mit dem Bolzenkopf 1 im Eingriff stehenden Schlüssels festhalten zu müssen. Am Ende der Anfangsphase des Aufschraubens, wenn die Mutter einfach mit dem zugeordneten Blech 6 in Berührung kommt, wird die Stellung nach Fig. 5 erhalten. Beim weiteren Aufschrauben der Mutter 7 zum Festziehen des Schraubenbolzens verkeilen sich die Vorsprünge 3 in der Bohrung 4 und verstärken dadurch ihre sperrende Wirkung, während ihre äussere Kante derart zusammengedrückt und verformt wird, dass de keilförmigen Selbstsperrvorsprünge 3 ganz in die Bohrung 4 eindringen und der Bolzenkopf gegen das zugeordnete Blech 5 zur Anlage kommt, wie in Fig. 6 dargestellt ist. In Fig. 7 ist der in dieser Weise verformte Teil 203 der Kante 103 des keilförmigen Vorsprungs 3 stirnseitig dargestellt. Die in der obigen Weise in der Bohrung 4 verkeilten Vorsprünge 3 sichern die Selbstsperrung des Schraubenbolzens auch nach dessen Festziehen und wirken als Sicherungselemente gegen das Abschrauben des Bolzens.

Die vorstehend beschriebenen, keilförmigen Selbstsperrvorsprünge 3 können in vielen unterschiedlichen Ausbildungen ausgeführt werden, wie in der Beschreibungseinleitung dargelegt wurde. Diese keilförmigen Selbstsperrvorsprünge können ausserdem auf Schraubenbolzen beliebiger Art und Grösse vorgesehen sein. Da der Bolzenkopf 1 des erfindungsgemässen Schraubenbolzens beim Aufschrauben der Mutter 7 nicht mit Hilfe eines besonderen Schlüssels festgehalten zu werden braucht, kann er eine beliebige Form aufweisen. Vorzugsweise wird jedoch die herkömmliche z.B. mehrkantige bzw. sechskantige Form des Bolzenkopfes 1 beibehalten, um erforderlichenfalls den Einsatz eines Schlüssels zu ermöglichen.

**Patentansprüche**

1. Verbindung von Blechen (5, 6) mittels eines durch eine Bohrung (4) in den Blechen (5, 6) geführten Schraubenbolzens mit einem Bolzenschaft (2), dessen Durchmesser (d) kleiner als der Durchmesser (D) der Bohrung (4) in den Blechen (5, 6) ist, und mit einem Bolzenkopf (1), dessen Breite grösser als der Durchmesser (D) dieser Bohrung (4) ist, sowie mit einem in der Ecke zwischen dem Bolzenkopf (1) und dem Bolzenschaft (2) angeordneten, in die Bohrung (4) eingreifenden keilförmigen Selbstsperrvorsprung (3), der die Drehung des Bolzenschafts (2) beim Aufschrauben und Festziehen der Mutter (7) verhindert und in seitlichem Aufriss, d.h. gesehen in zum Schraubenbolzen tangentialer Richtung die Form eines sich in Richtung auf den Bolzenkopf (1) radial erweiternden Keils aufweist, gekennzeichnet durch die Kombination folgender Merkmale:

a) mindestens zwei keilförmige Selbstsperrvorsprünge (3) sind in voneinander äquiangulär abstehenden Stellungen über den Bolzenumfang verteilt,

b) das in radialer Richtung breitere, mit dem Bolzenkopf (1) verbundene Basisende jedes dieser Selbstsperrvorsprünge (3) weist eine radiale Breite (b) auf, die etwas grösser ist als die Hälfte der Differenz (D-d) zwischen dem Durchmesser (D) der Bohrung (4) in den Blechen (5, 6) und dem Durchmesser (d) des Bolzenschafts (2),

c) die radial äussere Fläche (101) jedes keilförmigen Selbstsperrvorsprungs (3) ist gegenüber der Mantelfläche des Bolzenschafts (2) um einen Winkel (a) geneigt, der einen Wert von 45° nicht überschreitet,

d) der Schraubenbolzen ist durch Gesenkschmieden aus nicht gehärtetem Stahl hergestellt,

e) die Selbstsperrvorsprünge (3) sind derart bemessen, dass sie beim Festziehen des Schraubenbolzens mit Hilfe der Mutter (7) im Bereich ihrer radial äusseren Fläche (103) verformt, insbesondere abgeflacht (203) werden.

2. Verbindung nach Anspruch 1, dadurch gekennzeichnet, dass die keilförmigen Selbstsperrvorsprünge (3) in stirnseitigem Aufriss, d.h. gesehen in zum Schraubenbolzen radialer Richtung eine sich gegen ihr dem Bolzenkopf (1) abgekehrtes Ende verjüngende, insbesondere dreieckige, halbovale, halbkreisförmige oder ähnliche Form aufweisen.

3. Verbindung nach Anspruch 1, dadurch gekennzeichnet, dass die keilförmigen Selbstsperrvorsprünge (3) eine einem Halbkegel oder einem Halbkegelstumpf ähnliche Form aufweisen.

4. Verbindung nach Anspruch 1, dadurch gekennzeichnet, dass die keilförmigen Selbstsperrvorsprünge (3) eine einer halben Pyramide oder einem halben Pyramidenstumpf ähnliche Form aufweisen.

5. Verbindung nach Anspruch 1, dadurch gekennzeichnet, dass die keilförmigen Selbstsperrvorsprünge (3) eine im wesentlichen halbkugelförmige oder ähnliche Gestalt aufweisen.

6. Verbindung nach Anspruch 1, dadurch gekennzeichnet, dass die keilförmigen Selbstsperrvorsprünge (3) aus je einem kleinen, verhältnismässig schmalen, im wesentlichen radialen Steg bestehen, der in seitlichem Aufriss, d.h. gesehen in zum Schraubenbolzen tangentialer Richtung eine dreieckige oder trapezähnliche Form aufweist.

7. Verbindung nach Anspruch 1, dadurch gekennzeichnet, dass die geneigte, radial äussere Fläche (103) der keilförmigen Selbstsperrvorsprünge (3) mit einer Kante ausgebildet ist.

8. Verbindung nach Anspruch 7, dadurch gekennzeichnet, dass die keilförmigen Selbstsperrvorsprünge (3) die Form von Tetraedern od. dgl. aufweisen.

**Revendications**

1. Liaison de tôles (5, 6) au moyen d'un boulon fileté qui passe à travers un perçage (4) ménagé dans les tôles (5, 6) et qui comprend une tige de boulon (2) dont le diamètre (d) est inférieur au diamètre (D) du perçage (4) ménagé dans les tôles (5, 6), et une tête de boulon (1) dont la largeur est supérieure au diamètre (D) de ce perçage (4), ainsi qu'une saillie d'auto-blocage (3) en forme de coin qui est disposée dans le coin situé entre la tête (1) du boulon et la tige (2) du boulon, qui pénètre dans le perçage (4), qui empêche la rotation de la tige (2) du boulon lorsque l'on boulonne et serre l'écrou (7), et qui présente en vue en élévation latérale, c'est-à-dire lorsqu'elle est vue en direction tangentielle par rapport au boulon fileté, la forme d'un coin s'élargissant radialement en direction de la tête (1) du boulon, caractérisé par la combinaison des caractéristiques suivantes:

(a) au moins deux saillies d'auto-blocage (3) en forme de coin sont réparties sur la périphérie du boulon dans des positions angulairement équidistantes entre elles,

(b) l'extrémité de la base de chacune de ces saillies d'auto-blocage (3) qui est plus large en direction radiale et qui est reliée à la tête (1) du boulon présente une largeur radiale (b) qui est légèrement supérieure à la moitié de la différence (D − d) entre le diamètre (D) du perçage (4) ménagé dans les tôles (5, 6) et le diamètre (d) de la tige (2) du boulon,

(c) la surface (103) de chaque saillie d'auto-blocage (3) en forme de coin qui est extérieure dans le sens radial est inclinée par rapport à la surface extérieure de la tige (2) du boulon d'un angle (a) qui ne dépasse pas 45°,

(d) le boulon fileté est fabriqué par estampage en acier non trempé,

(e) les saillies d'auto-blocage (3) sont dimensionnées de telle manière que, lors du serrage du boulon fileté à l'aide de l'écrou (7), elles se déforment, et en particulier s'aplatissent (203), dans la région de leur surface qui est extérieure dans le sens radial (103).

2. Liaison selon la revendication 1, caractérisée par le fait que les saillies d'auto-blocage (3) en forme de coin présentent en vue en élévation frontale, c'est-à-dire vues en direction radiale par rapport au boulon fileté, une forme qui se rétrécit vers son extrémité opposée à la tête (1) du boulon et qui est en particulier triangulaire, demi-ovale, en forme de demi-cercle ou similaire.

3. Liaison selon la revendication 1, caractérisée par le fait que les saillies d'auto-blocage (3) en forme de coin présentent une forme analogue à celle d'un demi-cône ou d'un demi-tronc de cône.

4. Liaison selon la revendication 1, caractérisée par le fait que les saillies d'auto-blocage (3) en forme de coin présentent une forme analogue à celle d'une demi-pyramide ou d'un demi-tronc de pyramide.

5. Liaison selon la revendication 1, caractérisée par le fait que les saillies d'auto-blocage (3) en forme de coin présentent une forme pour l'essentiel hémisphérique ou similaire.

6. Liaison selon la revendication 1, caractérisée par le fait que les saillies d'auto-blocage (3) en forme de coin se composent chacune d'une petite nervure, relativement étroite et radiale pour l'essentiel, qui, en vue en élévation latérale, c'est-à-dire vue en direction tangentielle par rapport au boulon fileté, présentent une forme triangulaire ou analogue à celle d'un trapèze.

7. Liaison selon la revendication 1, caractérisée par le fait que la surface inclinée et extérieure dans le sens radial (103) des saillies d'autoblocage (3) en forme de coin est pourvue d'une arête.

8. Liaison selon la revendication 7, caractérisée par le fait que les saillies d'auto-blocage (3) en forme de coin présentent la forme de tétraèdres ou similaires.

**Claims**

1. Connection of metal sheets (5, 6) by means of a threaded bolt, guided through a bore (4) in the sheets (5, 6) comprising a bolt shaft (2) the diameter (d) of which is smaller than the diameter (D) of the bore (4) in the sheets (5, 6), and a bolt head (1) the breadth of which is larger than the diameter (D) of that bore (4), as well as a wedge-shaped self-locking protrusion (3) which is disposed in the corner between the bolt head (1) and the bolt shaft (2) and engages into the bore (4) which protrusion prevents turning of the bolt shaft (2) during mounting and tightening of the nut (7), and which has in laterally sectional view, i.e. as seen in the tangential direction toward the threaded bolt, the shape of a wedge which radially extends in the direction of the bolt head (1), characterised by the combination of the following features:-

(a) at least two wedge-shaped self-locking protrusions (3) are spaced over the bolt's circumference in equi-angular position from each other;

(b) the base end of each of these self-locking protrusions (3), which base end is broader in the radial direction and which is connected with the bolt head (1), has a radial breadth (b) which is slightly larger than one half of the difference (D-d) between the diameter (D) of the bore (4) in the sheets (5, 6) and the diameter (d) of the bolt shaft (2);

(c) the radial exterior surface (101) of each wedge-shaped self-locking protrusion (3) is slanted around an angle (a) of a value not exceeding 45° as against the covering surface of the bolt shaft (2);

(d) the threaded bolt is manufactured by drop-forging of non-hardened steel;

(e) the self-locking protrusions (3) are dimensioned such that they are deformed, in particular flattened (203), in the region of their radial exterior surface (103) when tightening the threaded bolts by means of the nut (7).

2. Connection according to Claim 1, characterised in that the wedge-shaped self-locking protrusions (3) in face-sided sectional view, i.e. as seen in the radial direction toward the threaded bolt, have a shape, in particular triangular, half-oval, semi-circular or similar, which narrows towards the end facing away from the bolt head (1).

3. Connection according to Claim 1, characterised in that the wedge-shaped self-locking protrusions (3) are of a shape similar to a half-wedge or a truncated cone.

4. Connection according to Claim 1, characterised in that the wedge-shaped self-locking protrusions (3), are of a shape similar to a half-pyramid or a half-pyramid stump.

5. Connection according to Claim 1, characterised in that the wedge-shaped self-locking protrusions (3) are substantially hemispherical or similar in shape.

6. Connection according to Claim 1, characterised in that the wedge-shaped self-locking protrusions (3) consist each of a smaller, relatively narrow, substantially radial bridge which has in lateral view, i.e. in the tangentially direction towards the threaded bolt, a triangular or trapeze-like shape.

7. Connection according to Claim 1, characterised in that the slanted, radial exterior surface (103) of the wedge-shaped self-locking protrusions (3) are equipped with an edge.

8. Connection according to Claim 7, characterised in that the wedge-shaped self-locking protrusions (3) are tetrahedrons in shape.

Fig.5

Fig.6

VII →

Fig. 7

Fig. 1

Fig. 2

Fig. 3

Fig. 4